(19) Europäisches Patentamt / European Patent Office / Office européen des brevets

(11) EP 4 086 060 A1

(12) EUROPÄISCHE PATENTANMELDUNG

(43) Veröffentlichungstag:
09.11.2022 Patentblatt 2022/45

(21) Anmeldenummer: 22170723.5

(22) Anmeldetag: 29.04.2022

(51) Internationale Patentklassifikation (IPC):
B29C 44/12 (2006.01)    F16L 59/14 (2006.01)
F16L 3/22 (2006.01)

(52) Gemeinsame Patentklassifikation (CPC):
B29C 44/1233; F16L 3/22; F16L 59/14

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
KH MA MD TN

(30) Priorität: 30.04.2021 AT 862021

(71) Anmelder: Isoplus Fernwärmetechnik
Gesellschaft m.b.H.
3192 Hohenberg (AT)

(72) Erfinder: Warta, Siegfried
3192 Hohenberg (AT)

(74) Vertreter: Ellmeyer, Wolfgang
Patentanwalt
Mariahilferstrasse 50
1070 Wien (AT)

(54) **VERFAHREN ZUR KONTINUIERLICHEN HERSTELLUNG EINES WÄRMEISOLIERTEN LEITUNGSROHRES**

(57) Verfahren zur kontinuierlichen Herstellung eines wärmeisolierten Leitungsrohres (20) mit zwei voneinander beabstandeten Innenrohren (21, 22), einem die zwei Innenrohre (21, 22) aufnehmenden Außenrohr (23) und einer innerhalb des Außenrohres (23) angeordneten Wärmedämmschicht (24), in welcher die zwei Innenrohre (21, 22) eingebettet sind, wobei die zwei Innenrohre (21, 22) kontinuierlich zugeführt und eingeschäumt werden, um die Wärmedämmschicht (24) auszubilden und auf die Wärmedämmschicht (24) das Außenrohr (23) aufgeformt wird, wobei während der kontinuierlichen Zuführung der zwei Innenrohre (21, 22) in vorbestimmbaren Abständen entlang der Längsachse laufend Zwischenabstandhalter (27) zwischen die zwei Innenrohre (21, 22) eingesetzt werden, die in ihrer eingesetzten Position zwischen den zwei Innenrohren (21, 22) von diesen derart gehalten werden, wobei ein Mindestabstand zwischen den zwei Innenrohren (21, 22) nicht unterschritten wird, wonach die zwei Innenrohre (21, 22) mit den eingesetzten Zwischenabstandhaltern (27) dem Schäumvorgang unterworfen werden.

FIG.2

Processed by Luminess, 75001 PARIS (FR)

EP 4 086 060 A1

## Beschreibung

Die Erfindung betrifft ein Verfahren zur kontinuierlichen Herstellung eines wärmeisolierten Leitungsrohres mit zwei voneinander beabstandeten Innenrohren, einem die zwei Innenrohre aufnehmenden Außenrohr und einer innerhalb des Außenrohres angeordneten Wärmedämmschicht, in welcher die zwei Innenrohre eingebettet sind, wobei die zwei Innenrohre kontinuierlich zugeführt und eingeschäumt werden, um die Wärmedämmschicht auszubilden und auf die Wärmedämmschicht das Außenrohr aufgeformt wird.

Bei der Herstellung von wärmeisolierten Leitungsrohren mit zwei Innenrohren kann es aufgrund der Dynamik des Herstellungsvorganges, insbesondere des Schäumvorganges zu einer Verlagerung der Innenrohre kommen, wodurch es zu einer unerwünschten Unterschreitung des vorgeschriebenen Abstandes zwischen den Innenrohren und dadurch beim fertigen Produkt zu einer Nichterfüllung von einzuhaltenden Wärmedämmwerten und/oder Abständen kommen kann.

Aus diesem Grund werden bei der *diskontinuierlichen* Fertigung von wärmeisolierten Leitungsrohren Abstandhalter verwendet, welche die Funktion haben, die als Mediumrohre ausgeführten Innenrohre im Außen- bzw. Mantelrohr zu platzieren und den gegenseitigen Abstand der beiden Innenrohre während des Schäumvorganges konstantzuhalten, wobei die Abstandhalter gegebenenfalls auch die Leckwarndrahtführung mitübernehmen.

Die dabei verwendeten Abstandhalter umschließen die Innenrohre fast zur Gänze und werden im Zuge des Zusammenbaus der Innenrohre mit dem Außenrohr in einem definierten Abstand auf die Innenrohre aufgebracht und fixiert, bevor sie in das Außenrohr eingeschoben werden, um danach dem Schäumvorgang zugeführt zu werden, wobei der Abstandhalter an der Innenseite des Außenrohrs abgestützt ist.

Diese Hilfsmittel können bei einer *kontinuierlichen* Fertigung nicht eingesetzt werden, da bei diesem Verfahren vor dem Schäumvorgang kein Außenrohr zur Verfügung steht, an dem sich die bisher bekannten Abstandhalter abstützen können, bzw. diese während der kontinuierlichen Zuführung der Innenrohre über Zufördereinheiten nicht aufgebracht werden können.

Ein Nachteil dieser bekannten Abstandhalter besteht auch darin, dass sie eine Wärmebrücke von den Innenrohren zum Außenrohr ausbilden und zudem beim Schäumvorgang durch ihre Geometrie den Expansionsprozess des Polyurethanschaumes behindern und es dabei auch zu Lunkerbildungen im Schaum kommen kann.

Aufgabe der Erfindung ist es daher, die Position der im kontinuierlichen Verfahren fliegend zugeführten Innenrohre im Schäumprozess besser festlegen zu können und die Ausbildung von Hohlräumen beim Schäumvorgang zu verhindern.

Erfindungsgemäß wird dies dadurch erzielt, dass während der kontinuierlichen Zuführung der zwei Innenrohre in vorbestimmbaren Abständen entlang der Längsachse laufend Zwischenabstandhalter zwischen die zwei Innenrohre eingesetzt werden, die in ihrer eingesetzten Position zwischen den zwei Innenrohren von diesen derart gehalten werden, dass ein Mindestabstand zwischen den zwei Innenrohren nicht unterschritten wird, wonach die zwei Innenrohre mit den eingesetzten Zwischenabstandhaltern dem Schäumvorgang unterworfen werden. Da die in einem Abstand zueinander eingesetzten Zwischenabstandhalter mit ihren Enden jeweils nur die beiden Innenrohre berühren - und auch ohne diese in irgendeiner Form zu umklammern-, entsteht keine Wärmebrücke zum Außenrohr hin und es wird aufgrund des kleinen Volumens der Zwischenabstandhalter auch dem Schäumprozess praktisch kein Widerstand entgegengesetzt, insbesondere im Bereich zwischen den Innenrohren kann, wie erwünscht, durch den Schäumvorgang das Volumen ohne Einschränkungen mit wärmedämmendem Material ausgefüllt werden.

Die erfindungsgemäß eingesetzten Zwischenabstandhalter sind so gestaltet, dass sie knapp vor dem Schäumvorgang im laufenden Betrieb zwischen den beiden Innenrohren platziert werden können und somit während des Schäumvorgangs ein vorgeschriebener Mindestabstand der Innenrohre nicht unterschritten wird. Die Abstände zwischen den Innenrohren sind in manchen Anwendungsfällen normiert und sind abhängig von der Dimension der Innenrohre unterschiedlich. Die Zwischenabstandhalter können zu diesem Zweck an die jeweiligen Anforderungen angepasst werden.

Die erfindungsgemäß eingesetzten Zwischenabstandhalter verhindern, dass sich die voneinander beabstandeten Innenrohre beim Schäumen durch den sich aufbauenden Schaumdruck aufeinander zubewegen und der definierte Abstand zwischen den Innenrohren dann nicht mehr gewährleistet werden könnte, was negative Auswirkungen auf die Dämmeigenschaften zur Folge haben könnte.

Die dafür vorgesehenen Zwischenabstandhalter können während der kontinuierlichen Zuführung der Innenrohre, und zwar bevorzugt mit einer Einsetz-Bewegung quer zur Vorschubrichtung der Innenrohre, laufend eingesetzt werden, ohne dass dabei eine Abstützung gegenüber anderen Elementen als die Innenrohre erforderlich ist, sodass die Zwischenabstandhalter nur von den Innenrohren getragen werden und somit der Mindestabstand zwischen den Innenrohren während des Schäumvorganges verlässlich eingehalten wird. Zugleich wird die Ausbildung einer Wärmebrücke zwischen dem im weiteren Herstellungsprozess ausgebildeten Außenrohr und den Innenrohren, wie sie bei bekannten Abstandhaltern entsteht, vermieden.

Weiters lassen die erfindungsgemäß eingesetzten Zwischenabstandhalter nur einen geringen Wärmefluss zwischen den zwei Innenrohren zu und behindern auch den Expansionsprozess des Schaumes nicht.

Die erfindungsgemäß eingesetzten Zwischenabstandhalter sind somit Hilfsmittel zur Verschäumung auf kontinuierlichen Produktionsanlagen, wobei sie sowohl für die Erzeugung von starren als auch flexiblen Fernwärmerohren mit zwei Innenrohren anwendbar sind.

Das erfindungsgemäße Einsetzen der Zwischenabstandhalter entspricht einem relativ einfachen Bewegungsvorgang und kann händisch oder durch einen Automaten auf einfache Weise erfolgen.

In weiterer Ausbildung der Erfindung können die zwei Innenrohre in einer im Wesentlichen horizontalen Ebene zugeführt werden, und die Zwischenabstandhalter jeweils von oberhalb der horizontalen Ebene in den Zwischenraum zwischen den zwei Innenrohren eingesetzt werden.

Dabei werden Zwischenabstandhalter in entsprechenden zeitlichen Abständen zwischen die Innenrohre eingesetzt, wodurch sich aufgrund der Zuführgeschwindigkeit, mit der die Innenrohre bewegt werden, eine entsprechende räumliche Beabstandung entlang der Längsachse ergibt.

Eine weitere Ausführungsform der Erfindung kann sein, dass die Zwischenabstandhalter nach dem Einsetzen zwischen die zwei Innenrohre im Wesentlichen mit entgegengesetzten Stirnseiten an zwei einander gegenüberliegenden Punkten am Außenumfang der zwei Innenrohre, die auf der gedachten Verbindungslinie zwischen den Mittelpunkten der zwei Innenrohre liegen, anliegen.

Sobald die Innenrohre durch den expandierenden Schaum und den dadurch entstehenden Druck in einem rechten Winkel auf die Förderrichtung aufeinander zubewegt werden und sich der Abstand zwischen den beiden Innenrohren zu verkleinern trachtet, wirken die Zwischenabstandhalter als Abstützungen, um den Mindestabstand zwischen den Innenrohren einzuhalten.

Weiters betrifft die Erfindung eine Anlage zur kontinuierlichen Herstellung eines wärmeisolierten Leitungsrohres mit zwei voneinander beabstandeten Innenrohren, einem die zwei Innenrohre aufnehmenden Außenrohr und einer innerhalb des Außenrohres angeordneten Wärmedämmschicht, in welcher die zwei Innenrohre eingebettet sind, mit einer Zuförderstation, einer Antriebsstation, einer Schaumstation sowie einer Ummantelungsstation.

Um die eingangs genannten Ziele der Erfindung zu erreichen, ist erfindungsgemäß vorgesehen, dass in Förderrichtung der zugeführten Innenrohre zwischen der Zuförderstation und der Schaumstation eine Beschickungsstation zum laufenden Einsetzen von Zwischenabstandhaltern angeordnet ist, über die Zwischenabstandhalter zwischen die zugeführten Innenrohre in vorbestimmbaren Abständen in Längsrichtung derart einsetzbar sind, dass die Zwischenabstandhalter zwischen den Innenrohren gehalten sind, um einen Mindestabstand zwischen diesen einzuhalten.

In der erfindungsgemäßen Beschickungsstation werden Zwischenabstandshalter in einer bestimmten zeitlichen Abfolge, vorzugsweise von einer Position oberhalb der sich bewegenden Innenrohre aus, nach unten bewegt und in den Zwischenraum zwischen den Innenrohren eingesetzt, sodass sie zwischen den Innenrohren aufgenommen und von diesen gehalten werden, um mit den Innenrohren in Richtung Schaumstation bewegt zu werden. Auf diese Weise kann ein präzises automatisches Einsetzen der Zwischenabstandhalter durchgeführt werden.

Weiters betrifft die Erfindung einen Zwischenabstandhalter zur Verwendung in einem Verfahren oder in einer Anlage zur kontinuierlichen Herstellung eines wärmeisolierten Leitungsrohres mit zwei voneinander beabstandeten Innenrohren.

Zur Erreichung der eingangs angegebenen Ziele der Erfindung kann erfindungsgemäß vorgesehen sein, dass an zwei entgegengesetzten Stirnseiten des Zwischenabstandhalters Auflageflächen zur Abstützung an zwei einander gegenüberliegenden umfangsseitigen Punkten der Innenrohre vorgesehen sind, wobei anhand des Abstandes der zwei Auflageflächen ein vorbestimmbarer Mindestabstand zwischen den Innenrohren einstellbar ist.

Die erfindungsgemäßen Zwischenabstandhalter werden derart in den Zwischenraum zwischen den zwei Innenrohren eingesetzt, dass die Auflageflächen der Zwischenabstandhalter jeweils an einander gegenüberliegenden Bereichen des Außenumfanges der zwei Innenrohre positioniert sind und in Position gehalten werden, sodass in weiterer Folge die Innenrohre mit den eingesetzten Zwischenabstandhaltern in die Schaumstation bewegt werden. Die mit ihren Auflageflächen an den Innenrohren abgestützten Zwischenabstandhalter verhindern eine durch den Expansionsdruck der Aufschäumung bewirkte Abstandsverkleinerung zwischen den beiden Innenrohren.

Gemäß einer weiteren Ausführungsform der Erfindung können die Auflageflächen durch einen Quersteg einstückig miteinander verbunden sein, und der Quersteg und die beiden Auflageflächen können eine I-Profilform aufweisen, wobei der Quersteg beim Einsetzen des Zwischenabstandhalters zwischen die Rohre parallel zur gedachten Verbindungsgeraden zwischen den Mittelpunkten der beiden Innenrohre gerichtet ist.

Durch die Zwischenabstandhalter in I-Profilform lassen sich relativ hohe, auf die Innenrohre wirkende Kräfte aufnehmen, um eine Abstandsverkleinerung zwischen den Rohren zu unterbinden. Eine weitere Abstützung ist nicht erforderlich.

Eine weitere Variante der Erfindung kann darin bestehen, dass auf einer Längsseite des Zwischenabstandhalters, die beim Einsetzen den Innenrohren zugewandt ist, die Auflageflächen jeweils Verlängerungen mit einer konvexen Krümmung aufweisen, und auf der anderen Längsseite des Zwischenabstandhalters die Auflageflächen jeweils Verlängerungen mit einer konkaven Krümmung aufweisen.

Bei den konvex gekrümmten Auflageflächenverlängerungen verringert sich deren gegenseitiger Abstand mit der Entfernung vom Quersteg und diese dienen der leichteren Einbringung der Zwischenabstandhalter in den Zwischenraum zwischen den Innenrohren. Der jeweilige Zwischenabstandhalter wird auf die Innenrohre von oben mit den konvex gekrümmten Auflageflächenverlängerungen auf die Umfangsflächen der Innenrohre aufgesetzt und dann in den Zwischenraum nach unten gedrückt, wobei die konvex gekrümmten Auflageflächenverlängerungen eine Führung bilden, um den Zwischenabstandhalter in eine stabile Position zwischen den Innenrohren zu bringen, aus der dieser nicht entweichen kann.

Die beim Einsetzen der Zwischenabstandhalter auf der von den Innenrohren abgewandten Seite ausgebildeten konkav gekrümmten Auflageflächenverlängerungen haben einen größeren gegenseitigen Abstand mit ansteigender Entfernung vom Quersteg. Sie verhindern damit ein Durchfallen der Zwischenabstandhalter durch den Zwischenraum der Innenrohre hindurch und tragen somit zur sicheren Halterung der Zwischenabstandhalter im eingesetzten Zustand bei.

Nachfolgend wird die Erfindung anhand der in den Zeichnungen dargestellten Ausführungsbeispiele eingehend erläutert. Es zeigt dabei

Fig.1 eine schematische Seitenansicht eines Ausführungsbeispiels einer Herstellungsanlage zur Anwendung des erfindungsgemäßen Verfahrens;

Fig.2 eine Schrägansicht einer Ausführungsform eines erfindungsgemäßen Abstandhalters;

Fig.3 einen Querschnitt von unter Verwendung der Herstellungsanlage gemäß Fig.1 zugeführten Innenrohren mit eingesetztem Abstandhalter vor dem Einschäumvorgang;

Fig.4 einen Querschnitt eines unter Verwendung der Herstellungsanlage gemäß Fig.1 hergestellten wärmeisolierten Rohres;

Fig.5 eine teilweise Draufsicht auf die Anlage gemäß Fig.1;

Fig.6 und 7 eine Seitenansicht und Draufsicht der Ausführungsform des erfindungsgemäßen Abstandhalters gemäß Fig.2 und

Fig.8 und 9 eine Seitenansicht und Draufsicht einer weiteren Ausführungsform des erfindungsgemäßen Abstandhalters.

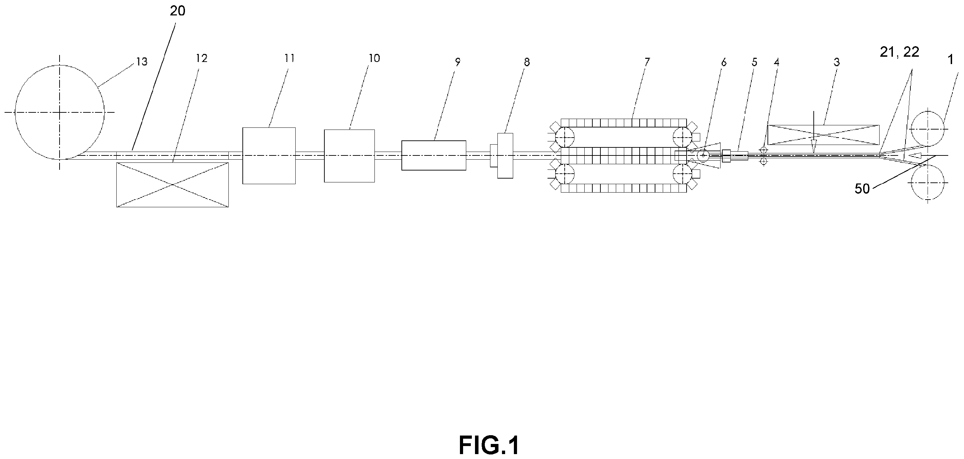

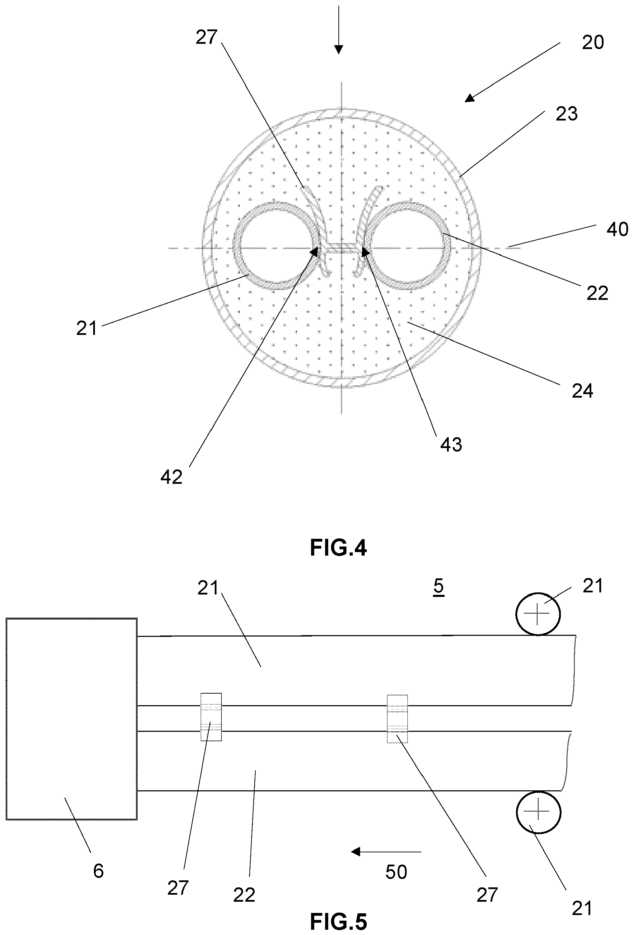

Fig.1 zeigt eine Ausführungsform einer Anlage zur kontinuierlichen Herstellung eines wärmeisolierten Leitungsrohres 20, das am Ende des Fertigungsprozesses zwei parallel voneinander beabstandete Innenrohre 21, 22, ein die zwei Innenrohre 21, 22 umgebendes Außenrohr 23 und eine innerhalb des Außenrohres 23 angeordnete Wärmedämmschicht 24 aufweist, in der die zwei Innenrohre 21, 22 eingebettet sind. Ein Querschnitt des derart hergestellten Leitungsrohres 20, das vollkommen ausgeschäumt ist, ist in Fig.4 gezeigt. Zusätzlich können bei Bedarf (nicht dargestellte) noch eine oder mehrere konzentrische Barriere- oder andere Funktionsschichten innerhalb des Außenrohres 23 ausgebildet sein.

Die Innenrohre 21, 22 können dabei flexibel oder starr ausgebildet sein und dienen bei Verwendung, ohne darauf beschränkt zu sein, z.B. dem Transport eines Wärme- oder Kühlmediums. Durch die zwei Innenrohre 21, 22 kann z.B. sowohl Zuleitung als Ableitung von in diesen geführten Flüssigkeiten erfolgen. Es sind beliebige andere Anwendungen des Leitungsrohres 20, z.B. bei der Förderung von Flüssigkeiten, wie z.B. Erdöl, oder Gasen, möglich.

Bei der in Fig.1 gezeigten Anlage erfolgt zunächst die kontinuierliche Zuführung der Innenrohre 21, 22 über eine Zuförderstation, bei flexiblen Rohren über Zuführtrommeln 1, bei starren Rohren über einen Zuförderer 3. Beide Zuführungsformen sind in der gezeigten Anlage vorgesehen. Die Bewegung der Innenrohre 21, 22 und in weiterer Folge des hergestellten wärmegedämmten Leitungsrohres 20 erfolgt innerhalb der Anlage mit einer gleichförmigen Fördergeschwindigkeit, und ist innerhalb der Anlage in Richtung eines Pfeils 50 gerichtet.

Im dargestellten Ausführungsbeispiel sind zwei parallele Innenrohre 21, 22 beschrieben, es kann das erfindungsgemäße Verfahren aber auch auf drei oder mehrere Innenrohre angewandt werden.

Die zwei Innenrohre 21, 22 bewegen sich kontinuierlich an verschiedenen, nachfolgend beschriebenen Arbeitsstationen, von denen nur die für die Erklärung der Erfindung wesentlichen dargestellt sind, vorbei, um in den Endzustand eines ummantelten, wärmeisolierten Rohres 20, wie in Fig.4 gezeigt, übergeführt zu werden. Die Innenrohre 21, 22 bewegen sich während des Herstellungsvorgangs im Wesentlichen parallel in einer horizontalen Ebene. Es sind aber auch andere Führungen der Innenrohre, z.B. übereinander möglich.

Die flexiblen Innenrohre 21, 22 können z.B. aus einem Kunststoff, z.B. Polyethylen, oder einem Metall, z.B.

Stahl oder Aluminium gebildet sein, wobei im Rahmen der Erfindung keine Einschränkung hinsichtlich des Materials, der Herstellungsart oder der Rohrwandstärke besteht. Die Innenrohre 21, 22 werden beim Durchlaufen der Herstellungsanlage durch nicht vollständig dargestellte Antriebs- oder Förderrollen bewegt und geführt. Die Art des Antriebs oder der Führung unterliegt keinerlei Einschränkung. Im Ausführungsbeispiel gemäß Fig.1 erfolgt der Antrieb der Innenrohre 21, 22 über eine Antriebseinheit 4, über welche die Innenrohre 21, 22 kontinuierlich einer Schaumstation 6 zugeführt werden. Die Antriebseinheit 4 könnte auch an einer anderen Stelle der erfindungsgemäßen Anlage vorgesehen sein.

Die zwei Innenrohre 21, 22 werden der Schaumstation 6 kontinuierlich zugeführt und in dieser eingeschäumt, um die Wärmedämmschicht 24 im fertigen Rohr 20 auszubilden.

Der Schäumvorgang im Bereich der Schaumstation 6 erfolgt in bekannter Weise, indem die Innenrohre 21, 22 von einer der Herstellungsanlage kontinuierlich zugeführten Folie (nicht dargestellt) umhüllt werden und dabei in der Schaumstation 6 von oben ein Schaumgemisch, z.B. Polyurethan, unter Beimischung eines Treibmittels in den von der Folie gebildeten offenen Schlauch zugeführt wird, wodurch die innerhalb der Folie geführten Innenrohre 21, 22 mit Schaum umgeben werden, der dann expandiert und aushärtet. Eine der Schaumstation 6 nachgelagerte Formstation 7 besteht aus in einer Raupeneinheit endlos umlaufenden Formhälften, die dem expandierenden und aushärtenden Schaum mit der außen anliegenden Folie eine zylindrische Außenform verleihen, sodass danach die Innenrohre 21, 22 mit dem umgebenden ausgehärteten Schaum und der Folie aus der Formstation 7 austreten, wonach diese mit Schaum und Folie umhüllten Innenrohre 21, 22 in eine Ummantelungsstation 8 eintreten und dort ein Außenrohr aus Kunststoff, z.B. HDPE, LDPE oder LLDPE aufgeformt, z.B. aufextrudiert wird, wobei die Innenrohre 21, 22, der expandierte, ausgehärtete Schaum, die umgebende Folie, die in Fig.4 nicht eingezeichnet ist, und das aufextrudierte Außenrohr einen Verbund ausbilden, der das fertige wärmeisolierte Rohr 20 ausbildet.

Vor (stromabwärts) der Schaumstation 6 erfolgt die Einbringung von Zwischenabstandhaltern 27 per Hand oder über eine Beschickungsstation 5 im automatisierten Betrieb. Die Zuführung erfolgt über ein oberhalb der Innenrohre 21, 22 angeordnetes (nicht dargestelltes) Magazin, von welchem die Zwischenabstandhalter 27 über eine nicht dargestellte Zuführeinrichtung von oben in die Position zwischen die Innenrohre 21, 22 gedrückt wird. Die Positionierung und Anzahl der Zwischenabstandhalter 27 im Rohr 20 kann frei gewählt werden. Fig.5 zeigt die in Richtung des Pfeils 50 bewegten Innenrohre 21, 22 im Bereich der Beschickungsstation 5, wobei seitliche Führungsrollen 71, 72 vorgesehen sind, die ein Auslenken der Innenrohre 21, 22 nach außen unterbinden.

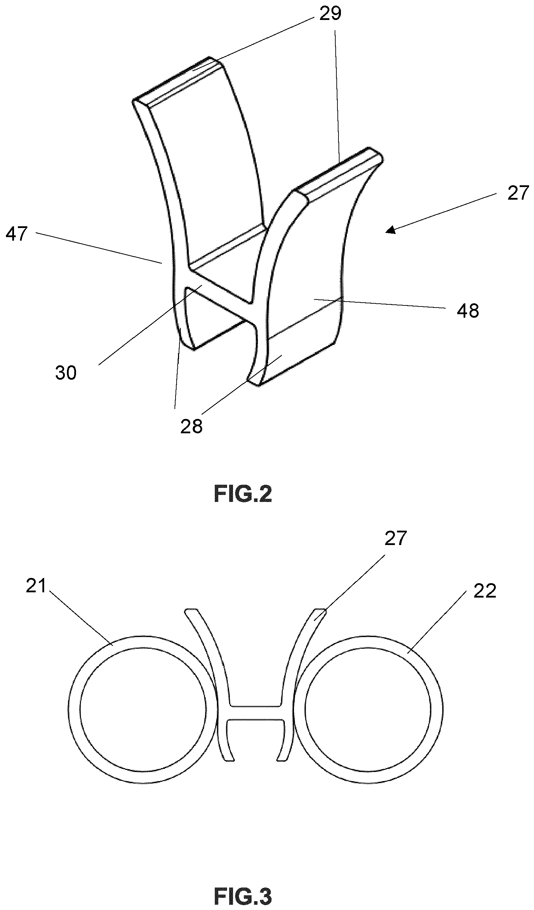

Erfindungsgemäß werden während der kontinuierlichen Zuführung der zwei Innenrohre 21, 22 in vorbestimmbaren Abständen entlang der Längsachse die Zwischenabstandhalter 27 (Fig.3, 5) laufend zwischen die zwei Innenrohre 21, 22 eingesetzt, die in ihrer eingesetzten Position zwischen den zwei Innenrohren 21, 22 von diesen derart gehalten werden, dass ein Mindestabstand zwischen den zwei Innenrohren 21, 22 nicht unterschritten wird, wonach die zwei Innenrohre 21, 22 mit den eingesetzten Zwischenabstandhaltern 27 dem Schäumvorgang unterworfen werden.

Da im Verlauf des Schäumvorgangs aufgrund der Auffüllung der einen hohlzylindrischen Raum aufspannenden Folie mit Schaum und der zugleich erfolgenden Schaumexpansion unterschiedliche Kräfte auf die Innenrohre 21, 22 wirken, die dazu neigen, den Abstand zwischen den beiden Innenrohren 21, 22 zu erhöhen oder zu verkleinern, ermöglicht das Einsetzen der Zwischenabstandhalter 27 eine einfache Einstellung des Mindestabstandes ohne Abstützung gegenüber einem Außenbereich.

Zu diesem Zweck ist in Förderrichtung der zugeführten Innenrohre 21, 22 zwischen den Zuführtrommeln 1 bzw. dem Zuförderer 3 und der Schaumstation 6 die Beschickungsstation 5 zum laufenden Einsetzen der Zwischenabstandhalter 27 angeordnet, über die die Zwischenabstandhalter 27 zwischen die zugeführten Innenrohre 21, 22 in vorbestimmbaren Abständen in Längsrichtung derart eingesetzt werden, dass die Zwischenabstandhalter 27 zwischen den Innenrohren 21, 22 gehalten sind, um einen Mindestabstand einzuhalten.

Die zwei Innenrohre 21, 22 werden, wie vorstehend erläutert und in Fig.5 gezeigt, in einer im Wesentlichen horizontalen Ebene zugeführt, und die Zwischenabstandhalter 27 jeweils von oberhalb der horizontalen Ebene in den Zwischenraum zwischen die zwei Innenrohre 21, 22 eingesetzt.

Fig.2 und 3 zeigen eine bevorzugte Ausführung eines erfindungsgemäß eingesetzten Zwischenabstandhalters 27, der aber auch in einer anders gestalteten Form für die Anwendung des erfindungsgemäßen Verfahrens ausgebildet sein kann.

Als Material für den Zwischenabstandhalter wird bevorzugt ein Spritzkunststoff eingesetzt, es kann aber auch jedes andere geeignete Material dafür verwendet werden.

An zwei entgegengesetzten Stirnseiten des Zwischenabstandhalters 27 sind Auflageflächen 47, 48 zur Abstützung an zwei einander gegenüberliegenden umfangsseitigen Punkten der Innenrohre 21, 22 vorgesehen, wobei anhand des Abstandes der zwei Auflageflächen 47, 48 ein vorbestimmbarer Mindestabstand zwischen den Innenrohren 20, 21 einstellbar ist.

Die Auflageflächen können mit einer entsprechend an den Außendurchmesser der Innenrohre 21, 22 angepassten, Vertiefung versehen sein, sodass sie stabil auf der Außenseite der Innenrohre 21, 22 aufliegen.

Die Auflageflächen 47, 48 sind durch einen Quersteg 30, dessen Breite w3 das Ausmaß der durch den Zwischenabstandhalter erzielten Beabstandung bestimmt, einstückig miteinander verbunden, wobei der Quersteg 30 und die beiden Auflageflächen 47, 48 eine I-Profilform aufweisen.

Der Quersteg 30 ist beim Einsetzen des Zwischenabstandhalters 27 zwischen die Innenrohre 20, 21 parallel zu einer gedachten Verbindungsgeraden 40 (Fig.4) zwischen den Mittelpunkten der beiden Innenrohre 20, 21 gerichtet.

Wie in Fig. 2 und 3 gezeigt weisen auf einer Längsseite des Zwischenabstandhalters 27, die beim Einsetzen den Innenrohren 20, 21 zugewandt ist, die Auflageflächen 47, 48 jeweils Verlängerungen 28 mit einer konvexen Krümmung auf, während auf der gegenüberliegenden anderen Längsseite des Zwischenabstandhalters 27 die Auflageflächen 47, 48 jeweils Verlängerungen 29 mit einer konkaven Krümmung aufweisen, wobei die konvex gekrümmten Verlängerungen 28 kürzer sind als die konkav gekrümmten Verlängerungen 29.

Die konvex gekrümmten Verlängerungen 28 des Zwischenabstandhalters dienen der Führung, um das Einsetzen der Zwischenabstandhalter 27 zu erleichtern. Wie aus Fig.3 ersichtlich verhindern die konkav gekrümmten Verlängerungen 29 des Zwischenabstandhalters 27 andererseits das Durchfallen des Zwischenabstandhalters 27 nach dem Einsetzen.

Nach dem jeweiligen, in Längsrichtung der Innenrohre 21, 22 beabstandeten Einsetzen der Zwischenabstandhalter 27 zwischen die zwei Innenrohre 21, 22 liegen diese im Wesentlichen mit entgegengesetzten Stirnseiten - im Querschnitt (siehe Fig.4) gesehen -an zwei einander gegenüberliegenden Punkten 42, 43 am Außenumfang der zwei Innenrohre 21, 22, die auf der gedachten Verbindungslinie 40 zwischen den Mittelpunkten der zwei Innenrohre 21, 22 liegen, an und werden in weiterer Folge der Schaumstation 6 zugeführt, wo der vorstehend bereits beschriebene Schäumvorgang durchgeführt wird.

Nach Durchlaufen der Anordnung aus Innenrohren 20, 21 und ausgehärtetem Schaum durch die Ummantelungsstation 8 erfolgt in einer Kühlstation 9 über ein oder mehrere Sprühbäder die Abkühlung der Außenrohroberfläche aus Kunststoff.

Eine Beförderungsraupeneinheit 10 übernimmt in Synchronisierung mit der Antriebseinheit 4+7 den Weitertransport des fertigen Rohres 20.

Auf einer Trennstation 11 erfolgt die Trennung der Rohre 20. Im Fall von starren Rohren werden diese auf die Fertigstellungsstation 12 für die Fertigkonfektionierung übergeben, während bei der Produktion von flexiblen Rohren diese auf einer Aufwickelstation 13 auf Trommeln aufgenommen werden.

Nachfolgend sind zwei Beispiele von Zwischenabstandhaltern angegeben, wobei alle in diesen Beispielen und sonst in der vorliegenden Anmeldung angegebenen Abmessungen als Beispiele anzusehen sind und keinerlei Einschränkung des Schutzbereiches darstellen, der Fachmann kann vielmehr auch geeignete andere Maße zur Erreichung der Aufgabe der Erfindung auswählen

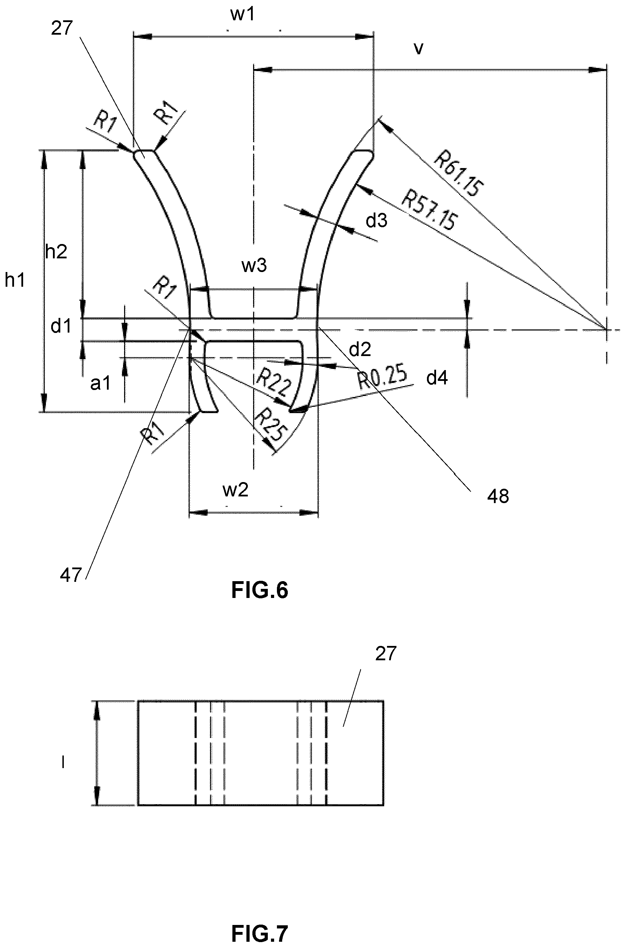

Beispiel 1 (Fig.6,7):

| | |
|---|---|
| - Dicke d1 des Querstegs 30: | 4,5 mm |
| - Dicke d2, d3 der konvex bzw. konkav gekr. Verlängerungen 28 bzw. 29: | 3 bzw. 4 mm |
| - Außenradius der konkav gekrümmten Verlängerungen 29: | R 57,15 |
| - Maximales Außenmaß w1 zwischen den konkav gekrümmten Verlängerungen 29: | 47 mm |
| - Außenradius der konvex gekrümmten | |
| Verlängerungen 28: | R 25 |
| - Diverse Rundungsradien: R1 | |
| - Mittenabstand v Quersteg- konkaver Außenradiusmittelpunkt: | 70 mm |
| - Höhenversatz a1 des Außenradius-Mittelpunkts der konvex gekrümmten Verlängerung 28: | 3,3mm |
| - Länge l des Zwischenabstandhalters 27: | 20 mm |
| - Höhe h2 der konkav gekrümmten | |
| Verlängerungen 29: | 33 mm |
| - Gesamthöhe h1 des Zwischenabstandhalters 27: | 51,5 mm |
| - Abstand w3 der Auflageflächen 47, 48: | 25 mm |
| - Maximaler Außenabstand w2 der konvex gekrümmten Verlängerungen 28: | 25,38 mm |

$$d4 = 0{,}5.d1$$

w2 ist geringfügig größer als w3, sodass sich außen an der Stelle der Auflageflächen 47, 48 des Zwischenabstandhalters 27, dort wo jeweils der konkav gekrümmte Verlauf der Verlängerungen 29 auf den konvex gekrümmten Verlauf der Verlängerungen 28 trifft, entsprechende Vertiefungen ergeben.

Der Außenradius der konkav gekrümmten Verlängerungen 29 ist dem Außendurchmesser der Innenrohre 21, 22 angepasst.

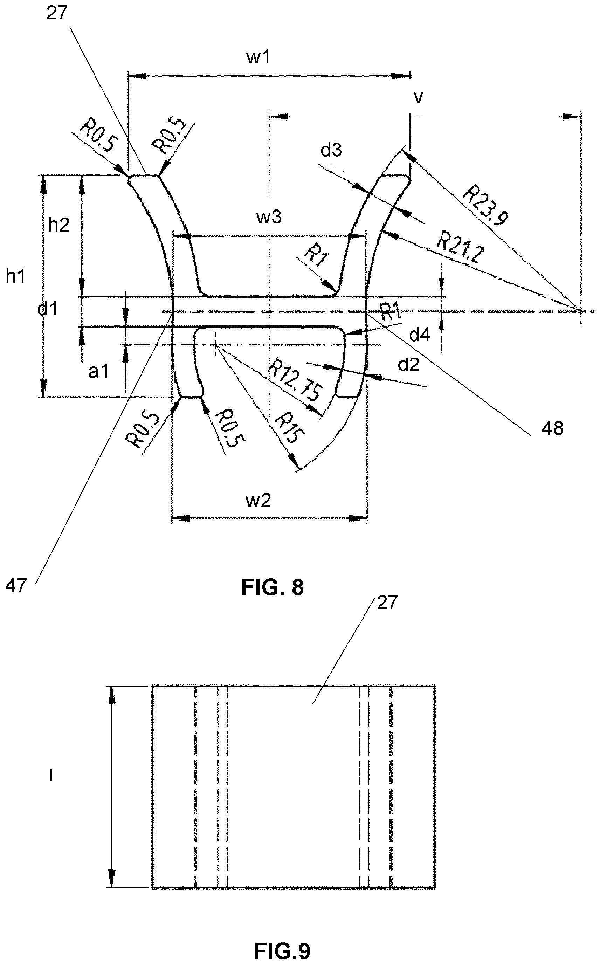

Beispiel 2 (Fig.8, 9):

| | |
|---|---|
| - Dicke d1 des Querstegs 30: | 3 mm |
| - Dicke d2, d3 der konvex bzw. konkav gekr. Verlängerungen 28 bzw. 29: | 2,25 bzw. 2,7 mm |
| - Außenradius der konkav gekrümmten Verlängerungen 29: | R 21,2 |
| - Maximales Außenmaß w1 zwischen den konkav gekrümmten Verlängerungen 29: | 28 mm |
| - Außenradius der konvex gekrümmten Verlängerungen 28: | R 15 |
| - Diverse Rundungsradien: R1 | |
| - Mittenabstand v Quersteg- konkaver Außenradiusmittelpunkt: | 31 mm |
| - Höhenversatz a1 des Außenradius-Mittelpunkts der konvex gekrümmten Verlängerung 28: | 1,75 mm |
| - Länge I des Zwischenabstandhalters 27: | 20 mm |
| - Höhe h2 der konkav gekrümmten Verlängerungen 29: | 12 mm |
| - Gesamthöhe h1 des Zwischenabstandhalters 27: | 22 mm |
| - Abstand w3 der Auflageflächen 47, 48: | 19 mm |
| - Maximaler Außenabstand w2 der konvex gekrümmten Verlängerungen 28: | 19,29 mm |

$$d4 = 0{,}5.d1$$

w2 ist geringfügig größer als w3, sodass sich außen an der Stelle der Auflageflächen 47, 48 des Zwischenabstandhalters 27, dort wo jeweils der konkav gekrümmte Verlauf der Verlängerungen 29 auf den konvex gekrümmten Verlauf der Verlängerungen 28 trifft, entsprechende Vertiefungen ergeben.

Der Außenradius der konkav gekrümmten Verlängerungen 29 ist dem Außendurchmesser der Innenrohre 21, 22 angepasst.

**Patentansprüche**

1. Verfahren zur kontinuierlichen Herstellung eines wärmeisolierten Leitungsrohres (20) mit zwei voneinander beabstandeten Innenrohren (21, 22), einem die zwei Innenrohre (21, 22) aufnehmenden Außenrohr (23) und einer innerhalb des Außenrohres (23) angeordneten Wärmedämmschicht (24), in welcher die zwei Innenrohre (21, 22) eingebettet sind, wobei die zwei Innenrohre (21, 22) kontinuierlich zugeführt und eingeschäumt werden, um die Wärmedämmschicht (24) auszubilden und auf die Wärmedämmschicht (24) das Außenrohr (23) aufgeformt wird, **dadurch gekennzeichnet, dass** während der kontinuierlichen Zuführung der zwei Innenrohre (21, 22) in vorbestimmbaren Abständen entlang der Längsachse laufend Zwischenabstandhalter (27) zwischen die zwei Innenrohre (21, 22) eingesetzt werden, die in ihrer eingesetzten Position zwischen den zwei Innenrohren (21, 22) von diesen derart gehalten werden, dass ein Mindestabstand zwischen den zwei Innenrohren (21, 22) nicht unterschritten wird, wonach die zwei Innenrohre (21, 22) mit den eingesetzten Zwischenabstandhaltern (27) dem Schäumvorgang unterworfen werden.

2. Verfahren nach Anspruch 1, **dadurch gekennzeichnet, dass** die zwei Innenrohre (21, 22) in einer im Wesentlichen horizontalen Ebene zugeführt werden, und die Zwischenabstandhalter (27) jeweils von oberhalb der horizontalen Ebene in den Zwischenraum zwischen den zwei Innenrohren (21, 22) eingesetzt werden.

3. Verfahren nach Anspruch 2, **dadurch gekennzeichnet, dass** die Zwischenabstandhalter (27) nach dem Einsetzen zwischen die zwei Innenrohre (21, 22) im Wesentlichen mit entgegengesetzten Stirnseiten an zwei einander gegenüberliegenden Punkten (42, 43) am Außenumfang der zwei Innenrohre (21, 22), die auf der gedachten Verbindungslinie (40) zwischen den Mittelpunkten der zwei Innenrohre (21, 22) liegen, anliegen.

4. Anlage zur kontinuierlichen Herstellung eines wärmeisolierten Leitungsrohres (20) mit zwei voneinander beabstandeten Innenrohren (21, 22), einem die zwei Innenrohre (21, 22) aufnehmenden Außenrohr (23) und einer innerhalb des Außenrohres (23) angeordneten Wärmedämmschicht (24), in welcher die zwei Innenrohre (21, 22) eingebettet sind, mit einer Zuförderstation (1, 3), einer Antriebsstation (4), einer Schaumstation (6) sowie einer Ummantelungsstation (8), **dadurch gekennzeichnet, dass** in Förderrichtung der zugeführten Innenrohre (21, 22) zwischen der Zuförderstation (1, 3) und der Schaumstation (6) eine Beschickungsstation (5) zum laufenden Einsetzen von Zwischenabstandhaltern (27) angeordnet ist, über die Zwischenabstandhalter (27) zwischen die zugeführten Innenrohre (21, 22) in vorbestimmbaren Abständen in Längsrichtung derart einsetzbar sind, dass die Zwischenabstandhalter (27) zwischen den Innenrohren (21, 22) gehalten sind, um einen Mindestabstand einzuhalten.

5. Zwischenabstandhalter zur Verwendung in einem Verfahren zur kontinuierlichen Herstellung eines wärmeisolierten Leitungsrohres mit zwei voneinander beabstandeten Innenrohren nach einem der Ansprüche 1 bis 3 oder in einer Herstellungsanlage zur kontinuierlichen Herstellung eines wärmeisolierten Leitungsrohres mit zwei voneinander beabstandeten Innenrohren nach Anspruch 4, **dadurch gekennzeichnet, dass** an zwei entgegengesetzten Stirnseiten des Zwischenabstandhalters Auflageflächen (47, 48) zur Abstützung an zwei einander gegenüberliegenden umfangsseitigen Punkten der Innenrohre vorgesehen sind, wobei anhand des Abstandes der zwei Auflageflächen (47, 48) ein vorbestimmbarer Mindestabstand zwischen den Innenrohren (20, 21) einstellbar ist.

6. Zwischenabstandhalter nach Anspruch 5, **dadurch gekennzeichnet, dass** die Auflageflächen (47, 48) durch einen Quersteg (30) einstückig miteinander verbunden sind, und dass der Quersteg (30) und die beiden Auflageflächen (47, 48) eine I-Profilform aufweisen, wobei der Quersteg (30) beim Einsetzen des Zwischenabstandhalters (27) zwischen die Innenrohre (20, 21) parallel zur gedachten Verbindungsgeraden (40) zwischen den Mittelpunkten der beiden Innenrohre (20, 21) gerichtet ist.

7. Zwischenabstandhalter nach Anspruch 6, **dadurch gekennzeichnet,** auf einer Längsseite des Zwischenabstandhalters (27), die beim Einsetzen den Innenrohren (20, 21) zugewandt ist, die Auflageflächen (47, 48) jeweils Verlängerungen mit einer konvexen Krümmung (28) aufweisen, und auf der anderen Längsseite des Zwischenabstandhalters (27) die Auflageflächen (47, 48) jeweils Verlängerungen mit einer konkaven Krümmung aufweisen.

FIG.1

29

27

47

30

48

28

**FIG.2**

27

21

22

**FIG.3**

**FIG.4**

**FIG.5**

**FIG.6**

**FIG.7**

**FIG. 8**

**FIG.9**

EUROPÄISCHER RECHERCHENBERICHT

Nummer der Anmeldung

EP 22 17 0723

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 0 459 973 A1 (PIPELIFE ROHRSYSTEME GMBH [AT]) 4. Dezember 1991 (1991-12-04) | 1-6 | INV. B29C44/12 F16L59/14 F16L3/22 |
| A | * Spalte 1, Zeile 1 - Zeile 5 * * Spalte 3, Zeile 36 - Spalte 4, Zeile 11 * * Spalte 5, Zeile 22 - Zeile 47 * * Spalte 6, Zeile 17 - Zeile 34 * * Abbildungen 1,2 * ----- | 7 | |
| X | JP H06 74368 A (NIPPON STEEL CORP) 15. März 1994 (1994-03-15) | 5,6 | |
| A | * Abbildungen 1,5,7 * ----- | 7 | |
| X | DE 10 2007 008016 A1 (HEINLOTH LUDWIG [DE]; BOECKLER MARTIN [DE]) 21. August 2008 (2008-08-21) | 5,6 | |
| A | * Abbildungen 1-5 * ----- | 7 | |

RECHERCHIERTE SACHGEBIETE (IPC)

B29C
F16L

Der vorliegende Recherchenbericht wurde für alle Patentansprüche erstellt

| Recherchenort | Abschlußdatum der Recherche | Prüfer |
|---|---|---|
| Den Haag | 4. Oktober 2022 | Ullrich, Klaus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 17 0723

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-10-2022

| Im Recherchenbericht angeführtes Patentdokument | Datum der Veröffentlichung | Mitglied(er) der Patentfamilie | Datum der Veröffentlichung |
|---|---|---|---|
| EP 0459973 A1 | 04-12-1991 | KEINE | |
| JP H0674368 A | 15-03-1994 | KEINE | |
| DE 102007008016 A1 | 21-08-2008 | KEINE | |

EPO FORM P0461

Für nähere Einzelheiten zu diesem Anhang : siehe Amtsblatt des Europäischen Patentamts, Nr.12/82